# EUROPÄISCHE PATENTSCHRIFT

(11) **EP 3 981 496 B1**
(45) Veröffentlichungstag und Bekanntmachung des Hinweises auf die Patenterteilung: **12.06.2024**
(21) Anmeldenummer: 21200835.3
(22) Anmeldetag: 05.10.2021
(51) Int. Cl.: B01D 47/02

(54) **NASSABSCHEIDER**
WET SEPARATOR
SÉPARATEUR PAR VOIE HUMIDE

(30) Priorität: 07.10.2020 DE 102020212675
(43) Veröffentlichungstag der Anmeldung: 13.04.2022
(73) Patentinhaber: Absaugwerk GmbH, 89129 Langenau (DE)
(72) Erfinder: Moll, Sebastian, 89129 Langenau (DE)
(74) Vertreter: Dr. Weitzel & Partner

(56) Entgegenhaltungen:
- EP-A2- 0 750 931
- DE-A1- 2 421 143
- US-A- 3 967 941

## Beschreibung

Die vorliegende Erfindung betrifft einen Nassabscheider für Gase oder Luft, insbesondere staubhaltige Gase oder Luft, gemäß dem Oberbegriff von Anspruch 1.

Nassabscheider für staubhaltige Gase oder Luft weisen meist einen Zyklon auf, durch den der zu reinigende Fluidstrom, das heißt die beispielsweise mit Schwebeteilchen oder Staub beladene Luft zum Beispiel aus einem industriell genutzten Innenraum, geleitet wird. Der Zyklon ist eingetaucht in ein Wasserbad oder unmittelbar oberhalb eines Wasserbads positioniert, sodass beim Verwirbeln des Fluidstroms im Zyklon Wasser aus dem Wasserbad gerissen wird und hierbei gebildete Wassertropfen im Zyklon zusammen mit der Luft verwirbelt werden, wobei die Tropfen Partikel aus dem Fluidstrom auswaschen. Beispielsweise offenbart DE 102 43 094 A1 einen solchen Nassabscheider mit einem Zyklon.

Ein weiterer Nassabscheider zum Reinigen eines staubbeladenen Gasstroms, umfassend ein Gehäuse mit einem Saugeinlass (Staublufteintritt) und einem Auslass (Reinluftaustritt), wobei in dem Gehäuse wenigstens ein Wirbelelement zum Hervorrufen einer Vermischung der zugeführten Staubluft mit Auswaschflüssigkeit angeordnet ist und sich unterhalb des zumindest einen Wirbelelementes ein Schlammbehälter befindet, wird in DE 20 2015 102 039 U1 offenbart.

DE 2 214 435 C3 offenbart einen Nassabscheider mit einem Saugeinlass eines Saugkanals, in dem ein Rohr mündet, das mit seinem von der Mündung abgewandten Ende unterhalb eines Wasserspiegels eines Wasserbads am Trichter eines Gehäuses angeschossen ist und ferner eine Zuluftöffnung aufweist, sodass aufgrund des Venturi-Effekts Wassertropfen aus dem Wasserbad in den Saugkanal gerissen werden.

DE 1 255 638 A und DE 1 107 647 A offenbaren Nassabscheider mit oberhalb eines Wasserbads angeordneten zentralen Saugrohren, die Wassertropfen aus dem Wasserbad reißen und mit der Zuluft vermischen. Auch hierbei ist ein Saugkanal, der einen Saugeinlass für Umgebungsluft aufweist, tangential an einer Kammer oberhalb des Wasserbads angeschlossen, sodass eine Verwirbelung der angesaugten Luft über dem Wasserbad erfolgt.

DE 23 40 195 A offenbart einen Nassabscheider mit gegeneinander gerichteten Venturi-Düsen, die ein Luft-Wasser-Gemisch noch besser vermischen sollen.

Nachteilig an den bekannten Nassabscheidern, die mit einem Zyklon oder anderen Verwirbelungselementen arbeiten, ist der große Druckverlust innerhalb des Zyklons oder dem Wirbelelement, welchem der durch den Nassabscheider geleitete Fluidstrom unterliegt. Ferner ist der konstruktive Aufbau meist aufwändig.

US 2 491 645 A offenbart einen gattungsgemäßen Nassabscheider. Der Nassabscheider weist im Bereich eines Saugeinlasses eine Wasseraufnahmeplatte auf, die gerade oberhalb des normalen Wasserpegels eines Wasservorrats positioniert ist. Der größte Teil der angesaugten Luft strömt über die Platte, weil die Öffnung für die Luft dort wesentlich größer ist als jene unter der Platte. Die Platte kann verstellbar an Konsolen aufgehängt sein, die an Seiten des Gehäuses angeschweißt sind. Während sich das Wasser unter der Platte hindurchbewegt, nimmt es Wassertröpfchen auf und transportiert dieses Wasser in einen weiter oben gelegenen Waschbereich des Nassabscheiders, in welchem das Wasser gegen Führungen geworfen wird und nach unten abtropft. Nachteilig an dieser Ausführungsform ist, dass durch das Waschen der Luft in einem mit Wassertröpfchen benetzten Bereich das Waschergebnis nicht ausreichend für verschiedene Anwendungen ist.

DE 24 21 143 A1 offenbart ein Verfahren und einen Nasswäscher zum Abscheiden von Staubpartikeln aus einem Luft- beziehungsweise Gasstrom. Der in das Gehäuse des Nasswäschers eintretende Strom des staubhaltigen Rohgases wird direkt und mindestens annähernd senkrecht in das Flüssigkeitsbad gelenkt und fließt im Bereich des Flüssigkeitsspiegels durch eine im Querschnitt ringförmige, in der Art von Diffusoren ausgebildete Strömungsleitvorrichtungen und wird in einen verhältnismäßig tief in das Flüssigkeitsbad einfließenden Strömungskern und in von diesem Kern abgeleitete Prall- und Wirbelströme unterteilt, aus deren Turbulenzbereich das Gas-Flüssigkeitsgemisch durch mindestens eine weitere Prall- und Wirbelvorrichtung sowie einen Beruhigungsraum und daraufhin durch gegenüber dem Beruhigungsraum verengte Prall- beziehungsweise Filtrierungsöffnungen abgesaugt wird.

EP 0 750 931 A2 offenbart einen Nassabscheider mit den im Oberbegriff von Anspruch 1 offenbarten Merkmalen.

Der vorliegenden Erfindung liegt die Aufgabe zugrunde einen Nassabscheider für Gase oder Luft anzugeben, der strömungstechnisch besonders günstig gestaltet ist, einen geringen Druckverlust aufweist und eine effektive Reinigung des Gases oder der Luft, insbesondere zur Schwebeteilchen- oder Staubbefreiung, ermöglicht.

Die erfindungsgemäße Aufgabe wird durch einen Nassabscheider mit den Merkmalen von Anspruch 1 gelöst. In den abhängigen Ansprüchen werden vorteilhafte und besonders zweckmäßige Gestaltungen der Erfindung angegeben.

Ein erfindungsgemäßer Nassabscheider für Gase oder Luft weist einen zu einer Umgebung offenen Saugeinlass sowie einen Auslass auf, ferner ein Gehäuse, in welchem ein Wasserbad vorgesehen ist und in welchem der Saugeinlass mündet.

Es ist ein Saugkanal innerhalb des Gehäuses vorgesehen, wobei der Saugeinlass im Saugkanal mündet, der Saugkanal strömungsleitend mit dem Auslass verbunden ist und ferner eingerichtet ist, einen durch den Saugeinlass angesaugten Fluidstrom mit Wasser aus dem Wasserbad zu kontaktieren, sodass der Fluidstrom beispielsweise von Schwebeteilchen oder anderen Verunreinigungen befreit wird.

Erfindungsgemäß ist im Saugkanal ein Strömungsteiler angeordnet, der den durch den Saugeinlass angesaugten Fluidstrom in wenigstens zwei Teilströme aufteilt und dabei den ersten Teilstrom durch das Wasserbad leitet und den zweiten Teilstrom am Wasserbad vorbei in den durch das Wasserbad geleiteten ersten Teilstrom einleitet.

Der erste Teilstrom, der durch das Wasserbad geleitet wird, ist größer als der zweite Teilstrom, der am Wasserbad vorbei in den durch das Wasserbad geleiteten ersten Teilstrom eingeleitet wird. Dies kann bevorzugt dadurch erreicht werden, dass der für den ersten Teilstrom vorhandene Strömungsquerschnitt am Strömungsteiler größer als der für zweiten Teilstrom vorhandene Strömungsquerschnitt am Strömungsteiler ist. Die Abzweigstelle teilt somit den Gesamtströmungsquerschnitt des Saugkanals in diese beiden Strömungsquerschnitte für den ersten und den zweiten Teilstrom auf.

Der Strömungsteiler teilt somit den angesaugten Fluidstrom auf und in Strömungsrichtung hinter dem Strömungsteiler wird der aufgeteilte Fluidstrom wieder vereint. Der Fluidstrom wird erfindungsgemäß nicht nur über die Oberfläche des Wasserspiegels geleitet und mit aus dem Wasserbad gerissenen Tröpfchen in Verbindung gebracht, sondern ein Teil des Fluidstroms, nämlich der im Strömungsteiler abgezweigte erste Teilstrom wird durch das Wasserbad hindurch geleitet, indem der erste Teilstrom in das Wasserbad eintaucht. Vorteilhaft reist er dabei Wassertröpfchen aus dem Wasserbad mit, sodass im wieder vereinten Fluidstrom diese Wassertröpfchen zu einer weiteren Reinigung des Fluidstroms führen. Die Erfindung schließt nicht aus, dass hinter dem Strömungsteiler ein Verwirbelungselement, beispielsweise ein Zyklon, vorgesehen ist, der kleiner als bisher ausgeführt sein kann, vorteilhaft kommt die Erfindung jedoch ohne ein solches Verwirbelungselement, das den Fluidstrom kreisförmig oder spiralförmig verwirbelt, aus, um den Druckverlust zu reduzieren.

Dadurch, dass der erste Teilstrom größer als der zweite Teilstrom ist, kann eine Wasserwand im Saugkanal gebildet werden, durch die der zweite Teilstrom geleitet wird und dabei gereinigt wird. Bevorzugt kann eine solche Wasserwand den gesamten Strömungsquerschnitt im Saugkanal bedecken, derart, dass der zweite Teilstrom nicht an der Wasserwand vorbei strömen kann, sondern gezwungen ist, durch die Wasserwand zu strömen.

Besonders sicher wird eine solche Wasserwand erreicht, wenn, wie nachfolgend noch beschrieben wird, zwei Tauchkanäle vorgesehen sind, die getrennt voneinander mit ihrem zweiten (unteren) Ende unter einem Wasserspiegel des Wasserbads münden, bevorzugt mit Abstand zueinander, insbesondere in der Horizontalrichtung. Somit kann der erste Teilstrom durch einen über dem Umfang geschlossenen ersten Tauchkanal in das Wasserbad und aus dem Wasserbad heraus durch einen über dem Umfang geschlossenen zweiten Tauchkanal zurück in den Saugkanal geführt werden, wobei sich insbesondere durch die Aufteilung des angesaugten Fluidstroms ein Unterdruck im Bereich der Mündung des zweiten Tauchkanals im Saugkanal ergibt, der das Herausreißen von Wasser aus dem Wasserbad und das Ausbilden einer Wasserwand begünstigt.

Bevorzugt ist die Aufteilung des angesaugten Fluidstroms in zwei Teilströme variabel einstellbar, sodass gemäß einer Ausführungsform gegebenenfalls der gesamte angesaugte Fluidstrom durch das Wasserbad geleitet werden kann, falls dies bei einer Anwendung oder für einen bestimmten Zeitraum notwendig sein sollte.

Bevorzugt wird der Strömungsteiler durch ein im Bereich des Saugeinlasses im Saugkanal angeordnetes Strömungsumlenkelement, insbesondere in Form eines Umlenkblechs, beispielsweise Winkelblechs, gebildet, wobei das Strömungsumlenkelement den ersten Teilstrom in das Wasserbad umleitet und den zweiten Teilstrom ohne Umlenkung passieren lässt oder in eine andere Richtung als den ersten Teilstrom umlenkt.

Das Umlenkblech, insbesondere Winkelblech, kann insbesondere höhenverstellbar im ersten Tauchkanal montiert sein.

Wenn das Strömungsumlenkelement als Winkelblech ausgeführt ist, so erstreckt sich dies bevorzugt zumindest im Wesentlichen annähernd über die gesamte Breite des Saugkanals im Bereich des Saugeinlasses.

Der Saugeinlass kann bevorzugt oberhalb des Wasserbads im Gehäuse münden, insbesondere unmittelbar oberhalb eines Wasserspiegels des Wasserbads, und das Strömungsumlenkelement kann den ersten Teilstrom nach unten und somit in das Wasserbad umlenken.

Gemäß der Erfindung weist der Saugkanal einen ersten Abschnitt auf, in welchem der Saugeinlass mündet und durch welchen der Fluidstrom noch ungeteilt strömt und an dessen Ende der Strömungsteiler angeordnet ist, sowie einen zweiten Abschnitt in Strömungsrichtung hinter dem Strömungsteiler, in welchem der erste Teilstrom und der zweite Teilstrom wieder vereint werden, und einen dritten Abschnitt, durch welchen der erste Teilstrom und der zweite Teilstrom wieder vereint als vereinter Fluidstrom strömen. Der zweite Abschnitt kann sich unmittelbar an den ersten Abschnitt anschließen und nur durch den Strömungsteiler vom ersten Abschnitt getrennt sein. Der dritte Abschnitt kann sich dann unmittelbar an den zweiten Abschnitt anschließen, wobei der dritte Abschnitt insbesondere in Strömungsrichtung eine wesentlich längere Erstreckung als der erste Abschnitt zusammen mit dem zweite Abschnitt aufweist, da in diesem dritten Abschnitt ein oder mehrere Elemente vorgesehen sein können, um das im vereinten Fluidstrom enthaltene Wasser wieder abzuscheiden.

Entsprechend ist vorteilhaft im dritten Abschnitt wenigstens ein Wasserabscheider vorgesehen. Es können auch mehrere Wasserabscheider vorgesehen sein, die vom vereinten Fluidstrom nacheinander durchströmt werden.

Wenigstens einer der Wasserabscheider ist bevorzugt als Lamellenabscheider ausgeführt, durch welchen der vereinte Fluidstrom strömt. Der Lamellenabscheider kann dabei mit einem unteren Ende in das Wasserbad eingetaucht sein, sodass zum einen im Lamellenabscheider abgeschiedenes Wasser zurück in das Wasserbad läuft und zum anderen das in das Wasserbad eingetauchte untere Ende ein Einströmen des zweiten Teilstroms in den zweiten Abschnitt begünstigt.

In dem dritten Abschnitt können eine oder mehrere Strömungsumlenkungen mit wenigstens einem Prallblech oder mit mehreren Prallblechen vorgesehen sein.

Dem Wasserabscheider und/oder dem wenigstens einen Prallblech sind bevorzugt Ablaufflächen und/oder Ablaufkanäle zugeordnet, die im Wasserabscheider und/oder am Prallblech abgeschiedenes Wasser in das Wasserbad leiten.

Gemäß einer Ausführungsform der Erfindung ist im dritten Abschnitt ein Filterelement, insbesondere ein Metallfilter angeordnet. Ein solcher Metallfilter umfasst beispielsweise ein Metallgestrick. Mit dem Filterelement, insbesondere dem Metallfilter, kann verbleibende Feuchtigkeit oder können Tröpfchen aus dem vereinten Fluidstrom ausgetragen werden.

Besonders bevorzugt weist der dritte Abschnitt des Saugkanals wenigstens eine untere Kammer und eine obere Kammer auf, die nacheinander vom vereinten Fluidstrom durchströmt werden. Beispielsweise strömt der vereinte Fluidstrom zunächst durch die untere Kammer, wird dann umgelenkt und tritt in die obere Kammer ein. In der unteren Kammer kann zum Beispiel der genannte Lamellenabscheider vorgesehen sein, wohingegen in der oberen Kammer beispielsweise Prallbleche und/oder das Filterelement, insbesondere der Metallfilter, angeordnet sind. Damit kann eine effektive Strömungsführung bei vergleichsweise geringen äußeren Abmaßen des Nassabscheiders erreicht werden.

Erfindungsgemäß ist wenigstens ein erster Tauchkanal vorgesehen, welcher ein erstes im ersten Abschnitt mündendes Ende und zweites unter einem Wasserspiegel des Wasserbads mündendes Ende aufweist. Über diesen ersten Tauchkanal kann dann der erste Teilstrom in das Wasserbad eingeleitet werden, wobei der Tauchkanal aufgrund seiner Erstreckung unterhalb des Wasserspiegels des Wasserbads ein entsprechend tiefes Einleiten des ersten Teilstroms bewirkt.

Der erste Tauchkanal kann sich unmittelbar an eine Unterkante des Strömungsteilers anschließen oder integral mit diesem ausgeführt sein.

Insbesondere stellt der Strömungsteiler eine nach oben verlängerte Wand des Tauchkanals dar. Diese Wand kann oben entgegen der Strömungsrichtung abgewinkelt sein, um ein Abzweigen des ersten Teilstroms zu begünstigen.

Beispielsweise werden der Tauchkanal und der Strömungsteiler durch eine Blechkonstruktion gebildet.

Erfindungsgemäß ist ferner wenigstens ein zweiter Tauchkanal vorgesehen, welcher ein erstes im zweiten Abschnitt mündendes Ende und zweites unter dem Wasserspiegel des Wasserbads mündendes Ende aufweist. Auch dieser zweite Tauchkanal begünstigt eine gute Durchmischung des ersten Teilstroms mit dem Wasser im Wasserbad und kann als Düse zur Erzeugung eines Luft-Wasser-Gemischs oder Gas-Wasser-Gemischs wirken.

Im Saugkanal kann bevorzugt in Strömungsrichtung hinter dem Wasserbad und insbesondere hinter dem Filterelement wenigstens ein Saugventilator angeordnet sein, der hinter dem Wasserbad einen entsprechenden Unterdruck, insbesondere in der unteren Kammer und der oberen Kammer, erzeugt, mit welchem der Fluidstrom durch den Saugeinlass und durch den Saugkanal gefördert wird. Der Auslass kann entsprechend in Strömungsrichtung hinter dem Saugventilator vorgesehen sein, beispielsweise im Bereich eines oberen Endes des Nassabscheiders.

Durch die erfindungsgemäße Gestaltung des Nassabscheiders mit dem Strömungsteiler im Saugkanal, sodass ein Teilstrom durch das Wasserbad geleitet wird und ein anderer Teilstrom am Wasserbad vorbei geleitet wird, können die herkömmlichen Strömungsverluste in Wirbelelementen vermieden werden. Bevorzugt ist der durch das Wasserbad geleitete erste Teilstrom größer als der zweite Teilstrom. Beispielsweise werden wenigstens 3/4, insbesondere wenigstens 80% oder wenigstens 90%, des angesaugten Fluidstroms als erster Teilstrom durch das Wasserbad geleitet, um einerseits genügend Wasser aus dem Wasserbad mitzureißen und andererseits eine Waschung des Fluidstroms im Wasserbad zu erreichen. Der zweite Teilstrom kann dann entsprechend beispielsweise 25%, 20% oder 10% des angesaugten Fluidstroms betragen. Das Vorbeiführen eines Teilstroms am Wasserbad vorbei reduziert die Strömungsverluste, sodass über den relativen Anteil der Gesamtverlust bestimmt wird.

Besonders bevorzugt ist der Strömungsteiler hinsichtlich der von ihm vorgenommenen Aufteilung des angesaugten Fluidstroms auf den ersten Teilstrom und den zweiten Teilstrom und gegebenenfalls weitere Teilströme einstellbar. Auch ist es möglich, den Gesamtströmungsquerschnitt des Strömungsteilers und/oder des Saugkanals einstellbar auszuführen, um den Nassabscheider an verschiedene Leistungsklassen anzupassen.

Das Gehäuse des Nassabscheiders kann modular oder nach dem Baukastenprinzip aufgebaut sein und ist bevorzugt zum Zwecke der Reinigung oder des Austausches von einzelnen Modulen oder Baukastenteilen demontierbar. Beispielsweise ist zumindest eine demontierbare Wand vorgesehen. Eine solche demontierbare Wand oder ein Teil einer solchen Wand kann auch in Form eines Revisionsbleches oder einer Türe beziehungsweise einer Klappe vorliegen.

Gemäß einer Ausführungsform ist der Saugeinlass wahlweise an verschiedenen Positionen am Gehäuse montierbar, das heißt das Gehäuse kann entsprechende Klappen und/oder verschließbare Öffnungen aufweisen, von denen eine als Saugeinlass dienen kann. Alternativ wird beim Zusammenbau des Gehäuses beziehungsweise des Nassabscheiders die Position durch die Auswahl entsprechender Module oder Baukastenteile und/oder durch deren entsprechende Anordnung und/oder Ausrichtung festgelegt.

Außerhalb des Saugeinlasses kann am Gehäuse eine Verlängerung des Saugkanals vorgesehen sein, wobei sich die Verlängerung beispielsweise horizontal und/oder vertikal außen am Gehäuse erstrecken kann.

Die Erfindung soll nachfolgend anhand eines Ausführungsbeispiels und den Figuren exemplarisch beschrieben werden.

Es zeigen:
- Figur 1: eine Vorderansicht eines erfindungsgemäß ausgeführten Nassabscheiders;
- Figur 2: eine Seitenansicht auf der dem Saugeinlass abgewandten Seite des Nassabscheiders aus der Figur 1;
- Figur 3: eine Querschnittsansicht entlang der Schnittlinie C-C aus der Figur 2;
- Figur 4: eine Schnittansicht entlang der Schnittlinie D-D aus der Figur 1;
- Figur 5: eine vergrößerte Ansicht des Bereiches des Strömungsteilers aus der Figur 3.

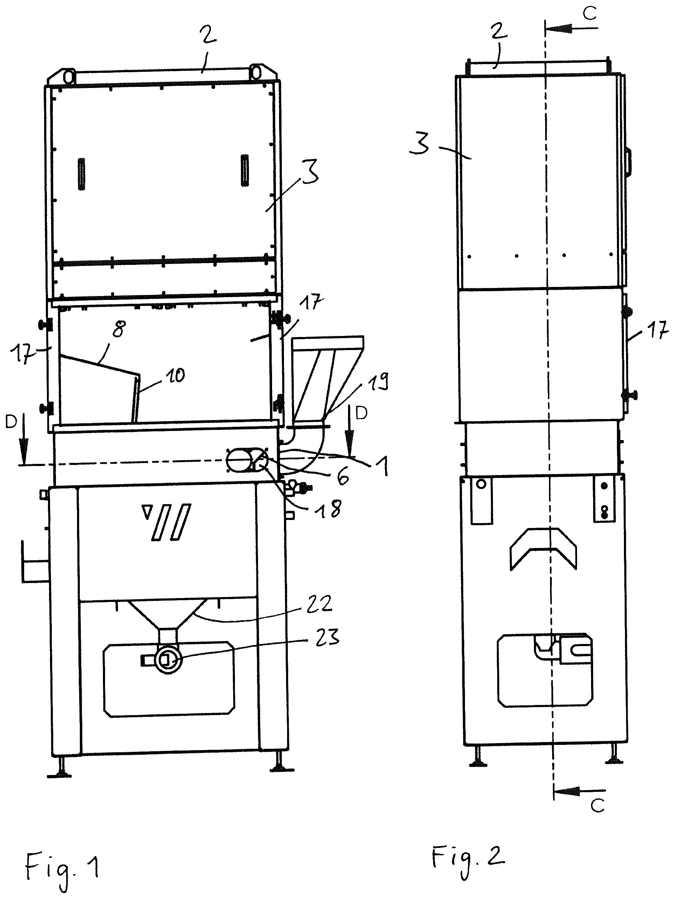

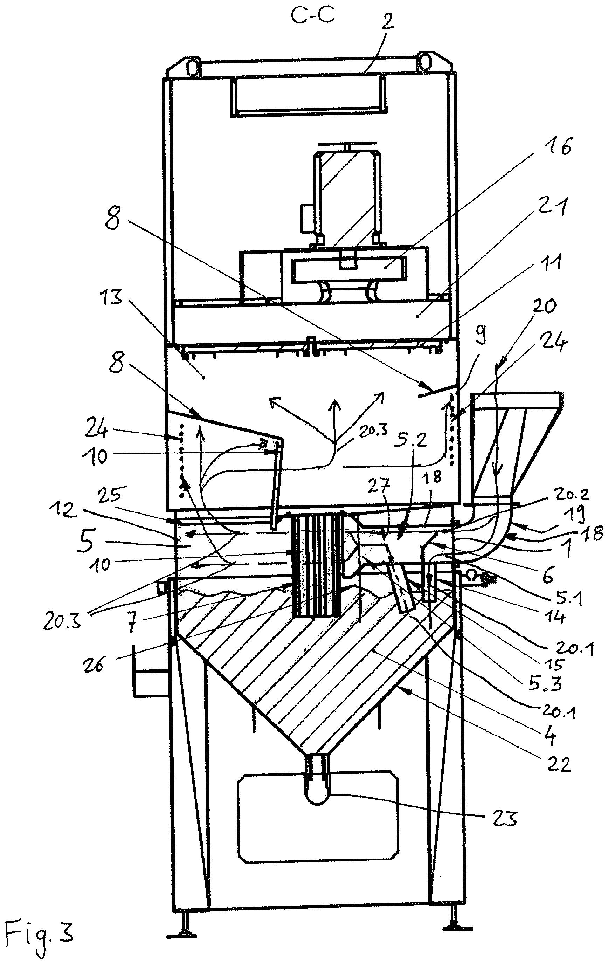

In den Figuren 1 und 2 ist ein Ausführungsbeispiel eines erfindungsgemäßen Nassabscheiders in einer Draufsicht von vorne und von einer Seite gezeigt. Der Nassabscheider weist ein Gehäuse 3 auf, das modular aufgebaut ist, und das verschiedene abnehmbare Wände 17 umfasst, um einen Zugriff in das Gehäuseinnere zu ermöglichen, beispielsweise zur Reinigung. Ferner ist eine Revisionsöffnung 18 im Bereich eines im nachfolgenden noch beschriebenen Strömungsteilers 6 vorgesehen. Bevorzugt sind mehrere Revisionsöffnungen 18 im Gehäuse 3 vorgesehen, wie in der Figur 3 ersichtlich ist.

Innerhalb des Gehäuses 3 verläuft, wie man besonders aus der Querschnittsdarstellung in der Figur 3 erkennen kann, ein Saugkanal 5, der von einem Saugeinlass 1 seitlich am Gehäuse 3 bis zu einem Auslass 2 oben im Gehäuse 3 reicht. Ferner ist im gezeigten Ausführungsbeispiel eine externe Verlängerung 19 vorgesehen, die einen Einlasstrichter umfasst und einen Fluidstrom 20 aus der Umgebung des Nassabscheiders in den Saugkanal 5 leitet.

Der Saugkanal 5 erstreckt sich beginnend am Saugeinlass 1 durch einen ersten Abschnitt 5.1, einen zweiten Abschnitt 5.2 und einen dritten Abschnitt 5.3. Der erste Abschnitt 5.1 ist unmittelbar hinter dem Saugeinlass 1 angeordnet und endet an dem Strömungsteiler 6. Der Strömungsteiler 6 teilt den Fluidstrom 20 in zwei Teilströme auf, einen ersten Teilstrom 20.1, der durch einen ersten Tauchkanal 14 in ein unterhalb des Saugkanals 5 positioniertes Wasserbad 4 geleitet wird, und einen zweiten Teilstrom 20.2, der am Strömungsteiler 6 vorbei in den in Strömungsrichtung hinter dem Strömungsteiler 6 beginnenden zweiten Abschnitt 5.2 geleitet wird. Im zweiten Abschnitt 5.2 werden der erste Teilstrom 20.1 und der zweite Teilstrom 20.2 wieder vereint und strömen als vereinter Fluidstrom 20.3 weiter in den dritten Abschnitt 5.3.

Der dritte Abschnitt 5.3 erstreckt sich beginnend hinter dem zweiten Abschnitt 5.2 zunächst durch eine untere Kammer 12, die auf derselben Höhe wie der erste Abschnitt 5.1 und der zweite Abschnitt 5.2 positioniert ist, und anschließend in eine obere Kammer 13, die oberhalb von der unteren Kammer 12 positioniert ist, und schließlich durch eine oberhalb von der oberen Kammer 13 angeordnete Luftkammer 21, die von der oberen Kammer 13 durch einen Metallfilter 11 (oder ein anderes Filterelement) getrennt ist. Aus der Luftkammer 21 saugt der oberhalb der Luftkammer 21 angeordnete Saugventilator 16 die Luft (oder gegebenenfalls ein Gas) ab und fördert diese zum Auslass 2, der nochmals durch Bleche oder dergleichen abgeschirmt sein kann.

Das Wasserbad 4 ist in einem Trichter 22 unterhalb der unteren Kammer 12 vorgesehen. Es könnten auch andere Formen für das Aufnahmebehältnis des Wasserbads 4 vorgesehen sein. Der Trichter 22 begünstigt jedoch ein Abfließen von abgeschiedenen Schwebeteilchen, insbesondere Schlamm, zum unteren Schlammauslass 23.

In der unteren Kammer 12 ist ein Lamellenabscheider 7 vorgesehen, der unmittelbar hinter dem zweiten Abschnitt 5.2 positioniert ist und bis in das Wasserbad 4 hineinragt. Der Lamellenabscheider 7 weist Ablaufkanäle 10 auf, durch die Tropfwasser, das in der oberen Kammer 13 vom vereinten Fluidstrom 20.3 abgeschieden wurde, in das Wasserbad 4 strömen kann.

Ferner ist ein zweiter Tauchkanal 15 vorgesehen, der mit seinem unteren Ende in das Wasserbad 4 hineinragt und mit seinem oberen Ende im zweiten Abschnitt 5.2 mündet.

Dadurch, dass der größere Teil des Fluidstroms 20, nämlich der erste Teilstrom 20.1, durch den zweiten Tauchkanal 15 geleitet wird und bevorzugt durch Ausbilden eines Unterdrucks im zweiten Abschnitt 5.2 wird so viel Wasser aus dem Wasserbad 4 mit dem ersten Teilstrom 20.1 herausgerissen, dass sich im zweiten Abschnitt 5.2 eine Wasserwand 27, die auch als Wasservorhang bezeichnet werden kann, bildet, durch die der zweite Teilstrom 20.2 strömen muss.

Im Bereich der Einströmung des vereinten Fluidstroms 20.3 in die obere Kammer 13 ist ein Prallblech 8 vorgesehen, das Wasser aus dem vereinten Fluidstrom 20.3 abscheidet. Exemplarisch ist ein Tropfwasserstrom 24 dargestellt. Im Übergang von der oberen Kammer 13 zur unteren Kammer 12 kann eine Wasserbruchkante 25 an der Wand des Gehäuses 3 vorgesehen sein, die ein Abtropfen des Wassers begünstigt. Ferner ist am unteren Ende des Prallblechs 8 ein Ablaufkanal 10 angeschlossen.

Nachdem der vereinte Luftstrom 20.3 aus dem durch das Prallblech 8 am Eingang der oberen Kammer 12 gebildeten Wasserabscheider ausströmt, trifft der vereinte Fluidstrom 20.3 auf den Metallfilter 11 und gegebenenfalls auf das auf der Saugeinlassseite innen am Gehäuse 3 angeordnete weitere Prallblech 8. Auch hier läuft ein Tropfwasserstrom 24 an einer Ablauffläche 9, die durch die Gehäuseinnenwand gebildet wird, nach unten in das Wasserbad 4, beispielsweise durch die Ablaufkanäle 10 im Lamellenabscheider 7.

Zusätzlich oder alternativ kann auch eine Ablaufdrainage 26 zum Abführen des Wassers in das Wasserbad 4 vorgesehen sein.

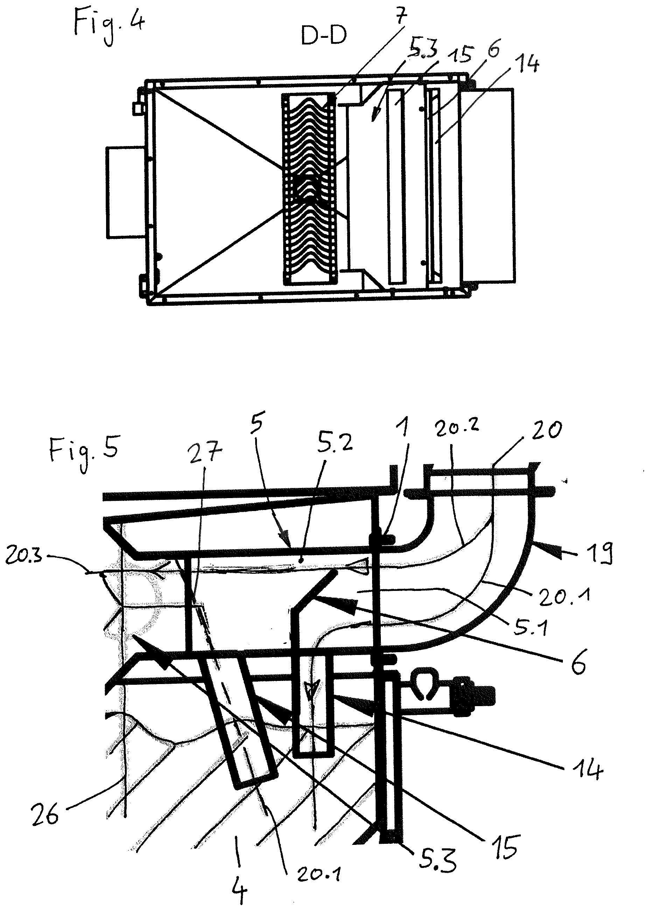

In der Figur 5 sind der erste Abschnitt 5.1, der zweite Abschnitt 5.2 und der Beginn des dritten Abschnitts 5.3 des Saugkanals 5 nochmals in vergrößerter Ansicht gezeigt. Man erkennt ferner die in Verlängerung des zweiten Tauchkanals 15.2 ausgebildete Wasserwand 27.

In der Figur 4 ist der Bereich mit dem Lamellenabscheider 7, dem Strömungsteiler 6 und dem ersten Tauchkanal 14 und dem zweiten Tauchkanal 15 in einer Ansicht von oben gezeigt. Der erste Tauchkanal 14 wird teilweise durch das Blech verdeckt, das den Strömungsteiler 6 bildet.

### Bezugszeichenliste

- 1: Saugeinlass
- 2: Auslass
- 3: Gehäuse
- 4: Wasserbad
- 5: Saugkanal
- 5.1: erster Abschnitt
- 5.2: zweiter Abschnitt
- 5.3: dritter Abschnitt
- 6: Strömungsteiler
- 7: Lamellenabscheider
- 8: Prallblech
- 9: Ablauffläche
- 10: Ablaufkanal
- 11: Metallfilter
- 12: untere Kammer
- 13: obere Kammer
- 14: erster Tauchkanal
- 15: zweiter Tauchkanal
- 16: Saugventilator
- 17: Wand
- 18: Revisionsöffnung
- 19: Verlängerung
- 20: Fluidstrom
- 20.1: erster Teilstrom
- 20.2: zweiter Teilstrom
- 20.3: vereinter Fluidstrom
- 21: Luftkammer
- 22: Trichter
- 23: Schlammauslass
- 24: Tropfwasserstrom
- 25: Wasserbruchkante
- 26: Ablaufdrainage
- 27: Wasserwand

## Patentansprüche

1. Nassabscheider für Gase oder Luft
mit einem zu einer Umgebung offenen Saugeinlass (1);
mit einem Auslass (2);
mit einem Gehäuse (3), in welchem ein Wasserbad (4) vorgesehen ist und in welchem der Saugeinlass (1) mündet;
mit einem Saugkanal (5) innerhalb des Gehäuses (3), wobei der Saugeinlass (1) im Saugkanal (5) mündet, der Saugkanal (5) strömungsleitend mit dem Auslass (2) verbunden ist und eingerichtet ist einen durch den Saugeinlass (1) angesaugten Fluidstrom (20) mit Wasser aus dem Wasserbad (4) zu kontaktieren; wobei
im Saugkanal (5) ein Strömungsteiler (6) angeordnet ist, der den durch den Saugeinlass (1) angesaugten Fluidstrom (20) in wenigstens zwei Teilströme (20.1, 20.2) aufteilt und dabei den ersten Teilstrom (20.1) durch das Wasserbad (4) leitet und den zweiten Teilstrom (20.2) am Wasserbad (4) vorbei in den durch das Wasserbad (4) geleiteten ersten Teilstrom (20.1) einleitet; wobei
der erste Teilstrom (20.1) größer als der zweite Teilstrom (20.2) ist; **dadurch gekennzeichnet, dass**
der Saugkanal (5) einen ersten Abschnitt (5.1) aufweist, in welchem der Saugeinlass (1) mündet und durch welchen der Fluidstrom (20) noch ungeteilt strömt und an dessen Ende der Strömungsteiler (6) angeordnet ist, sowie einen zweiten Abschnitt (5.2) in Strömungsrichtung hinter dem Strömungsteiler (6), in welchem der erste Teilstrom (20.1) und der zweite Teilstrom (20.2) wieder vereint werden, und einen dritten Abschnitt (5.3), durch welchen der erste Teilstrom (20.1) und der zweite Teilstrom (20.2) wieder vereint als vereinter Fluidstrom (20.3) strömen; wobei wenigstens ein erster Tauchkanal (14) vorgesehen ist, welcher ein erstes im ersten Abschnitt (5.1) mündendes Ende und zweites unter einem Wasserspiegel des Wasserbads (4) mündendes Ende aufweist, und wenigstens ein zweiter Tauchkanal (15) vorgesehen ist, welcher ein erstes im zweiten Abschnitt (5.2) mündendes Ende und ein zweites unter dem Wasserspiegel des Wasserbads (4) mündendes Ende aufweist.

2. Nassabscheider gemäß Anspruch 1, **dadurch gekennzeichnet, dass** im Saugkanal (5) eine durch den ersten Teilstrom (20.1) erzeugte Wasserwand (27) vorgesehen ist, die insbesondere vertikal ausgerichtet ist.

3. Nassabscheider gemäß einem der Ansprüche 1 oder 2, **dadurch gekennzeichnet, dass** das zweite unter einem Wasserspiegel des Wasserbads (4) mündende Ende des ersten Tauchkanals (14) mit Abstand, insbesondere in Horizontalrichtung, zum zweiten unter dem Wasserspiegel des Wasserbads (4) mündenden Ende des zweiten Tauchkanals (15) positioniert ist.

4. Nassabscheider gemäß einem der Ansprüche 1 bis 3, **dadurch gekennzeichnet, dass** der Strömungsteiler (6) durch ein im Bereich des Saugeinlasses (1) im Saugkanal (5) angeordnetes Strömungsumlenkelement gebildet wird, das den ersten Teilstrom (20.1) durch den ersten Tauchkanal (14) in das Wasserbad (4) umleitet und den zweiten Teilstrom (20.2) passieren lässt oder in eine andere Richtung als den ersten Teilstrom (20.1) umlenkt.

5. Nassabscheider gemäß Anspruch 4, **dadurch gekennzeichnet, dass** der Strömungsteiler (6) durch ein Umlenkblech, insbesondere Winkelblech, gebildet wird, wobei das Umlenkblech insbesondere höhenverstellbar im ersten Tauchkanal (14) montiert ist.

6. Nassabscheider gemäß einem der Ansprüche 4 oder 5, **dadurch gekennzeichnet, dass** der Saugeinlass (1) oberhalb des Wasserbads (4) im Gehäuse (3) mündet und das Strömungsumlenkelement den ersten Teilstrom (20.1) nach unten umlenkt.

7. Nassabscheider gemäß einem der Ansprüche 1 bis 6, **dadurch gekennzeichnet, dass** im dritten Abschnitt (5.3) wenigstens ein Wasserabscheider vorgesehen ist.

8. Nassabscheider gemäß Anspruch 7, **dadurch gekennzeichnet, dass** wenigstens einer der Wasserabscheider als Lamellenabscheider (7) ausgeführt ist, durch welchen der vereinte Fluidstrom (20.3) strömt, wobei der Lamellenabscheider (7) insbesondere mit einem unteren Ende in das Wasserbad (4) eingetaucht ist.

9. Nassabscheider gemäß einem der Ansprüche 1 bis 8, **dadurch gekennzeichnet, dass** im dritten Abschnitt (5.3) eine oder mehrere Strömungsumlenkungen mit wenigstens einem Prallblech (8) oder mehreren Prallblechen (8) vorgesehen sind.

10. Nassabscheider gemäß einem der Ansprüche 7 bis 9, **dadurch gekennzeichnet, dass** dem Wasserabscheider und/oder dem wenigstens einen Prallblech (8) Ablaufflächen (9) und/oder Ablaufkanäle (10) zugeordnet sind, die im Wasserabscheider und/oder am Prallblech (8) abgeschiedenes Wasser in das Wasserbad (4) leiten.

11. Nassabscheider gemäß einem der Ansprüche 1 bis 10, **dadurch gekennzeichnet, dass** im dritten Abschnitt (5.3) ein Filterelement wie ein Metallfilter (11), insbesondere umfassend ein Metallgestrick, angeordnet ist.

12. Nassabscheider gemäß einem der Ansprüche 1 bis 11, **dadurch gekennzeichnet, dass** der dritte Abschnitt (5.3) wenigstens eine untere Kammer (12) und eine obere Kammer (13) umfasst, die nacheinander vom vereinten Fluidstrom (20.3) durchströmt werden, wobei die obere Kammer (13) insbesondere stromabwärts der unteren Kammer (12) angeordnet ist.

13. Nassabscheider gemäß einem der Ansprüche 1 bis 12, **dadurch gekennzeichnet, dass** im Saugkanal (5) in Strömungsrichtung hinter dem Wasserbad (4) und insbesondere hinter dem Metallfilter (11) wenigstens ein Saugventilator (16) angeordnet ist.

## Claims

1. Wet separator for gases or air,
having a suction inlet (1) open to an environment;
having an outlet (2);
having a housing (3) in which a water bath (4) is provided and into which the suction inlet (1) opens;
having a suction channel (5) within the housing (3), wherein the suction inlet (1) opens into the suction channel (5), the suction channel (5) is connected to the outlet (2) in a flow-conducting manner and is adapted to contact a fluid flow (20) drawn in through the suction inlet (1) with water from the water bath (4); wherein a flow divider (6) is arranged in the suction channel (5), which divides the fluid flow (20) drawn in through the suction inlet (1) into at least two partial flows (20.1, 20.2) and in this context guides the first partial flow (20.1) through the water bath (4) and introduces the second partial flow (20.2) past the water bath (4) into the first partial flow (20.1) guided through the water bath (4); wherein the first partial flow (20.1) is greater than the second partial flow (20.2);
**characterized in that**
the suction channel (5) has a first section (5.1), into which the suction inlet (1) opens and through which the fluid flow (20) still flows undivided and at the end of which the flow divider (6) is arranged, and a second section (5. 2) in the flow direction downstream of the flow divider (6), in which the first partial flow (20.1) and the second partial flow (20.2) are reunited, and a third section (5.3) through which the first partial flow (20.1) and the second partial flow (20.2) flow reunited as a combined fluid flow (20.3); wherein
at least one first immersion channel (14) is provided, which has a first end opening in the first section (5.1) and a second end opening below a water level of the water bath (4), and at least one second immersion channel (15) is provided, which has a first end opening in the second section (5.2) and a second end opening below the water level of the water bath (4).

2. Wet separator according to claim 1, **characterized in that** a water wall (27) which is aligned vertically in particular and generated by the first partial flow (20.1) is provided in the suction channel (5).

3. Wet separator according to one of claims 1 or 2, **characterized in that** the second end of the first immersion channel (14), which opens below a water level of the water bath (4), is positioned at a distance, in particular in the horizontal direction, from the second end of the second immersion channel (15), which opens below the water level of the water bath (4).

4. Wet separator according to one of claims 1 to 3, **characterized in that** the flow divider (6) is formed by a flow deflector element arranged in the suction channel (5) in the region of the suction inlet (1), which deflects the first partial flow (20.1) through the first immersion channel (14) into the water bath (4) and allows the second partial flow (20.2) to pass or deflects it in a direction other than the first partial flow (20.1).

5. Wet separator according to claim 4, **characterized in that** the flow divider (6) is formed by a deflector plate, in particular an angled plate, wherein the deflector plate is mounted in the first immersion channel (14) in a height-adjustable manner in particular.

6. Wet separator according to one of claims 4 or 5, **characterized in that** the suction inlet (1) opens above the water bath (4) in the housing (3) and the flow deflector element deflects the first partial flow (20.1) downwards.

7. Wet separator according to one of claims 1 to 6, **characterized in that** at least one water separator is provided in the third section (5.3).

8. Wet separator according to claim 7, **characterized in that** at least one of the water separators is designed as a lamella separator (7) through which the combined fluid flow (20.3) flows, wherein the lamella separator (7) is immersed in the water bath (4), in particular with a lower end.

9. Wet separator according to one of claims 1 to 8, **characterized in that** one or more flow deflectors having at least one baffle plate (8) or a plurality of baffle plates (8) are provided in the third section (5.3).

10. Wet separator according to one of claims 7 to 9, **characterized in that** the water separator and/or the at least one baffle plate (8) are assigned discharge surfaces (9) and/or discharge channels (10) which conduct water separated in the water separator and/or on the baffle plate (8) into the water bath (4).

11. Wet separator according to one of claims 1 to 10, **characterized in that** a filter element such as a metal filter (11), in particular comprising a metal mesh, is arranged in the third section (5.3).

12. Wet separator according to one of claims 1 to 11, **characterized in that** the third section (5.3) comprises at least a lower chamber (12) and an upper chamber (13), through which the combined fluid flow (20.3) flows in succession, wherein the upper chamber (13) is arranged in particular downstream of the lower chamber (12).

13. Wet separator according to one of claims 1 to 12, **characterized in that** at least one suction fan (16) is arranged in the suction channel (5) downstream of the water bath (4) and in particular downstream of the metal filter (11) in the direction of flow.

## Revendications

1. Séparateur par voie humide pour des gaz ou de l'air
avec une entrée d'aspiration (1) ouverte vers l'environnement ;
avec une sortie (2) ;
avec un boîtier (3) dans lequel est prévu un bain d'eau (4) et dans lequel débouche l'entrée d'aspiration (1) ;
avec un canal d'aspiration (5) à l'intérieur du boîtier (3), l'entrée d'aspiration (1) débouchant dans le canal d'aspiration (5), le canal d'aspiration (5) communiquant avec la sortie (2) pour acheminer le flux et étant aménagé pour mettre en contact un flux de fluide (20) aspiré par l'entrée d'aspiration (1) avec de l'eau du bain d'eau (4) ;
dans lequel un diviseur de flux (6) est disposé dans le canal d'aspiration (5), divise le flux de fluide (20) aspiré par l'entrée d'aspiration (1) en au moins deux flux partiels (20.1, 20.2) et achemine le premier flux partiel (20.1) à travers le bain d'eau (4) et amène le deuxième flux partiel (20.2), en contournant le bain d'eau (4), dans le premier flux partiel (20.1) acheminé à travers le bain d'eau (4) ; le premier flux partiel (20.1) étant plus grand que le deuxième flux partiel (20.2) ; **caractérisé en ce que** le canal d'aspiration (5) comporte un premier segment (5.1) dans lequel débouche l'entrée d'aspiration (1) et à travers lequel le flux de fluide (20) circule sans encore avoir été divisé et à l'extrémité duquel est disposé le diviseur de flux (6), ainsi qu'un deuxième segment (5.2) en aval du diviseur de flux (6) dans le sens d'écoulement, dans lequel le premier flux partiel (20.1) et le deuxième flux partiel (20.2) sont réunis, et un troisième segment (5.3) à travers lequel le premier flux partiel (20.1) et le deuxième flux partiel (20.2) réunis circulent sous la forme d'un flux de fluide réuni (20.3),
au moins un premier canal plongeant (14) étant prévu, qui comporte une première extrémité débouchant dans le premier segment (5.1) et une deuxième extrémité débouchant sous un niveau d'eau du bain d'eau (4), et au moins un deuxième canal plongeant (15) étant prévu, qui comporte une première extrémité débouchant dans le deuxième segment (5.2) et une deuxième extrémité débouchant sous un niveau d'eau du bain d'eau (4).

2. Séparateur par voie humide selon la revendication 1, **caractérisé en ce qu'**est prévu dans le canal d'aspiration (5) un mur d'eau (27), en particulier orienté verticalement, créé par le premier flux partiel (20.1).

3. Séparateur par voie humide selon l'une des revendications 1 ou 2, **caractérisé en ce que** la deuxième extrémité du premier canal plongeant (14) débouchant sous un niveau d'eau du bain d'eau (4) est positionnée à distance, en particulier dans le sens horizontal, de la deuxième extrémité du deuxième canal plongeant (15) débouchant sous le niveau d'eau du bain d'eau (4).

4. Séparateur par voie humide selon l'une des revendications 1 à 3, **caractérisé en ce que** le diviseur de flux (6) est formé par un élément déflecteur de flux disposé dans la zone de l'entrée d'aspiration (1) dans le canal d'aspiration (5), qui détourne le premier flux partiel (20.1) dans le bain d'eau (4) à travers le premier canal plongeant (14) et laisse passer le deuxième flux partiel (20.2) ou le dévie dans une autre direction que le premier flux partiel (20.1).

5. Séparateur par voie humide selon la revendication 4, **caractérisé en ce que** le diviseur de flux (6) est formé par une tôle déflectrice, en particulier une tôle en coin, laquelle tôle déflectrice est montée, en particulier de façon réglable en hauteur, dans le premier canal plongeant (14).

6. Séparateur par voie humide selon l'une des revendications 4 ou 5, **caractérisé en ce que** l'entrée d'aspiration (1) débouche dans le boîtier (3) au-dessus du bain d'eau (4) et l'élément déflecteur de flux dévie le premier flux partiel (20.1) vers le bas.

7. Séparateur par voie humide selon l'une des revendications 1 à 6, **caractérisé en ce qu'**au moins un séparateur d'eau est prévu dans le troisième segment (5.3).

8. Séparateur par voie humide selon la revendication 7, **caractérisé en ce qu'**au moins un des séparateurs d'eau est réalisé comme un séparateur à lamelles (7) à travers lequel passe le flux de fluide réuni (20.3), lequel séparateur à lamelles (7) est plongé dans le bain d'eau (4), en particulier à une extrémité inférieure.

9. Séparateur par voie humide selon l'une des revendications 1 à 8, **caractérisé en ce qu'**une ou plusieurs déviations de l'écoulement sont prévues dans le troisième segment (5.3), avec au moins une tôle de chicane (8) ou plusieurs tôles de chicane (8).

10. Séparateur par voie humide selon l'une des revendications 7 à 9, **caractérisé en ce que** sont associés au séparateur d'eau et/ou à l'au moins une tôle de chicane (8) des surfaces d'écoulement (9) et/ou des canaux d'écoulement (10) qui acheminent l'eau séparée dans le séparateur d'eau et/ou sur la tôle de chicane (8) vers le bain d'eau (4).

11. Séparateur par voie humide selon l'une des revendications 1 à 10, **caractérisé en ce qu'**un élément filtrant tel qu'un filtre métallique (11), en particulier comprenant des mailles métalliques, est disposé dans le troisième segment (5.3).

12. Séparateur par voie humide selon l'une des revendications 1 à 11, **caractérisé en ce que** le troisième segment (5.3) comprend au moins une chambre inférieure (12) et une chambre supérieure (13) qui sont parcourues l'une après l'autre par le flux de fluide réuni (20.3), la chambre supérieure (13) étant en particulier disposée en aval de la chambre inférieure (12).

13. Séparateur par voie humide selon l'une des revendications 1 à 12, **caractérisé en ce qu'**au moins un ventilateur d'aspiration (16) est disposé dans le canal d'aspiration (5) après le bain d'eau (4), et en particulier après le filtre métallique (11), dans le sens d'écoulement.
